Europäisches Patentamt

European Patent Office

Office européen des brevets

(11) Publication number:

**0 323 863**
A2

# EUROPEAN PATENT APPLICATION

(21) Application number: **89104033.9**

(22) Date of filing: **30.10.85**

(51) Int. Cl.⁴: **F 16 L 37/22**

(30) Priority: **29.05.85 GB 8513474**

(43) Date of publication of application:
**12.07.89 Bulletin 89/28**

(84) Designated Contracting States: **CH DE FR IT LI**

(60) Publication number of the earlier application in
accordance with Art. 76 EPC: **0 204 047**

(71) Applicant: **Barnes, Austen Bernard**
**5040 Coronation Road**
**RR2 Whitby Ontario L1N 5R5 (CA)**

(72) Inventor: **Barnes, Austen Bernard**
**5040 Coronation Road**
**RR2 Whitby Ontario L1N 5R5 (CA)**

(74) Representative: **Lyndon-Stanford, Edward Willoughby**
**Brooke et al**
**MARKS & CLERK 57/60 Lincoln's Inn Fields**
**London WC2A 3LS (GB)**

(54) Axial locking device.

(57) The axial locking device comprises two separable members (10,12) which can be locked together and unlocked by relative axial movement of the two members in one direction. A slider (26) is incorporated in one of the members (12) and is movable relative to the member (12) against a spring (36) when the two members are moved axially relative to one another in said one direction. The slider (26) is displaced in one angular direction by interengagement of mutually engageable teeth (38,40) on the one member and on the slider each time the slider is moved axially. This angular displacement of the slider locks the two members together when they are first pushed axially together against the force exerted by the spring on the slider and then unlocks the two members when they are subsequently pushed axially together against said spring force to permit one handed and/or speedy operation of the locking device.

FIG.1.

Description

# AXIAL LOCKING DEVICE

## Background of the Invention

This invention relates to a releasable axial locking device for locking together and unlocking two separable members by relative axial movement of the two members in one sense, the device having locking means comprising resilient means which oppose the relative axial movement of the two members in said one sense, a slider associated with one of the members and moveable axially relative to said one member when the two members are moved axially relative to one another in said one sense, and means moveable in an angular direction as the two members are moved axially relative to one another in said one sense.

Such an axial locking device can resist tensile loads unrelated to the axial force required to operate the locking device, and the axial movement used permits one-handed and/or speedy operation. When the two members are pushed axially together against the force exerted by the resilient means, the members lock; when the members are again pushed together axially, they are unlocked and can be pulled apart.

An axial locking device is disclosed in DE-A-2 145 964, in which there is an axially-moveable slider which cooperates with a rotary member, the slider being moved axially against a spring when said two members are pushed together. The allows the slider to execute an extended return axial movement under the action of the spring, when the two members are released after being initially pushed together. This extended return movement of the slider actuates the locking means.

For this purpose, the end of the second member has a spigot which passes up the centre of the slider, and the slider has radial through-holes carrying locking balls; around the slider there is an outer casing whose end narrows down so that as the slider executes its extended return movement, the locking balls engage the casing and are pressed into the spigot and the thus lock the spigot in position and the two members to each other. The locking is released when the two members are again pushed together in said one sense.

This prior art device give the problem that an extended return movement of the two members is required in order to provide the locking. In addition, the actual locking position is not very precisely determined, and will depend upon the amount of deformation that occurs to the casing and the spigot and hence on the amount of impact provided by the spring on the return movement.

It is desirable to provide a device in which the locking does not require too great a relative movement between said two members.

## The Invention

According to the invention the angularly moveable means comprise cam means which lock the two members together on a first relative axial movement of the two members in said one sense, and then unlock the two members on a second relative axial movement in said one sense.

By having the angularly moveable means acting as the cam means, the device is not dependent on the axial return movment for the locking as such, though some axial return movement is requirement in the embodiments described in order to move the cam means angularly.

A through hole can be provided in the device, making it suitable for use as a gas, fluid, electric or fibre optic connector.

Preferred and/or optional features of the invention are set forth in Claims 2 to 11.

## Preferred Embodiments

The invention will now be more particularly described, by way of example, with reference to the accompanying drawings, in which:

Figure 1 is a longitudinal section through one embodiment of a device according to the invention, with the two members shown in a locked position;

Figure 2 is a side view of the male member of the device shown in Figure 1;

Figure 3 is an end view of the male member of Figure 2, taken in the direction of arrow A;

Figure 4 is an outer end view of the entrance guide to the female member of the device shown in Figure 1;

Figure 5 is a side view of the entrance guide of Figure 4;

Figure 6 is an inner end view of the entrance guide of Figures 4 and 5;

Figure 7 is a side view of the slider of the device shown in Figure 1;

Figure 8 is a side view showing the teeth at the innermost end of the female part of the device shown in Figure 1;

Figures 9 and 10 are fragmentary longitudinal sectional views of two further embodiments of a device according to the invention;

Figures 11 and 12 show the cam configurations of the devices shown in Figures 9 and 10 respectively;

Figure 13 is a longitudinal sectional view of another embodiment of a device according to the invention;

Figure 14 is a schematic developed view showing the arrangement of teeth in the device of Figure 13;

Figures 15 and 16 are longitudinal sectional views of yet further embodiments of a device according to the invention;

Figure 17 is a perspective view of a detail of the device of Figure 16;

Figure 18 is a longitudinal sectional view of yet another embodiment of a device according to the invention; and

Figure 19 is a perspective view of a detail of the device shown in Figure 18.

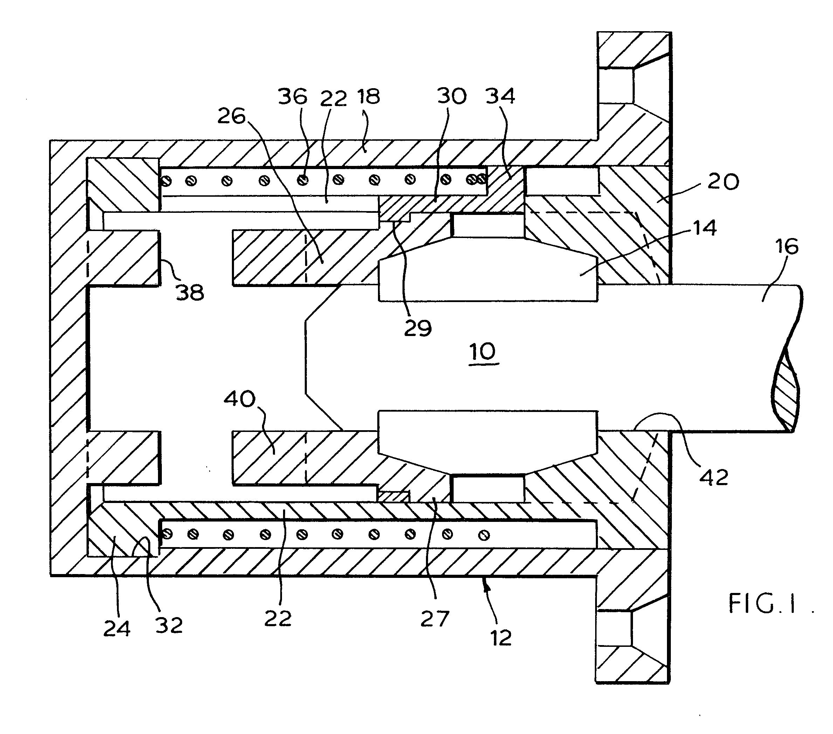

Referring firstly to Figures 1-8, the axial locking device shown therein comprises male and female members 10 and 12 respectively, which can be locked together and unlocked by relative axial movement of the two members in one direction only. The male member 10 has a plurality of radially outwardly extending teeth 14 chamfered on the leading and trailing faces. As shown there are four such teeth 14 which are equi-angularly spaced apart but there could be any number of teeth exceeding one. As shown the toothed portion of the male member 10 is solid with an axial connecting shaft 16 but the toothed portion could be free to rotate relative to the connecting shaft 16 for reasons which will become apparent hereinafter.

The female member 12 comprises an outer cylindrical housing 18 closed at one end and open at the other, an entrance guide 20 having an integral axially inwardly extending spider 22 provided with radially outwardly extending feet 24 at the innermost end of the spider legs, and an annular slider 26 and associated spider 30. The feet 24 of the spider 22 engage as a snap-fit in an annular groove 32 in the base of the housing 18 to fix the entrance guide in the housing 18 at the open end thereof. The slider 26 is slidably mounted within the spider 22 integral with the entrance guide 20 and the legs of the spider 30 are interposed between the legs of the spider 22. The slider 26 is rotatable relative to its associated spider 30 and has an outwardly extending flange 27 engageable with an inwardly extending flange 29 of the spider 30 so that the spider 30 moves with the slider 26 when the latter is moved coaxially inwards in the housing and the slider moves with the spider 30 when the latter is urged in an opposite axial direction.

The free ends of the legs of the spider 30 have radially outwardly extending feet 34 and a compression spring 36 is interposed in the gap between the housing 18 and the spider 22 and extends axially between the feet 24 and the feet 34 to urge the slider 26 towards the entrance guide 20. This arrangement provides for a spring length which extends over a large part of the length of the housing 18, giving good fatigue life, with minimum percentage compression.

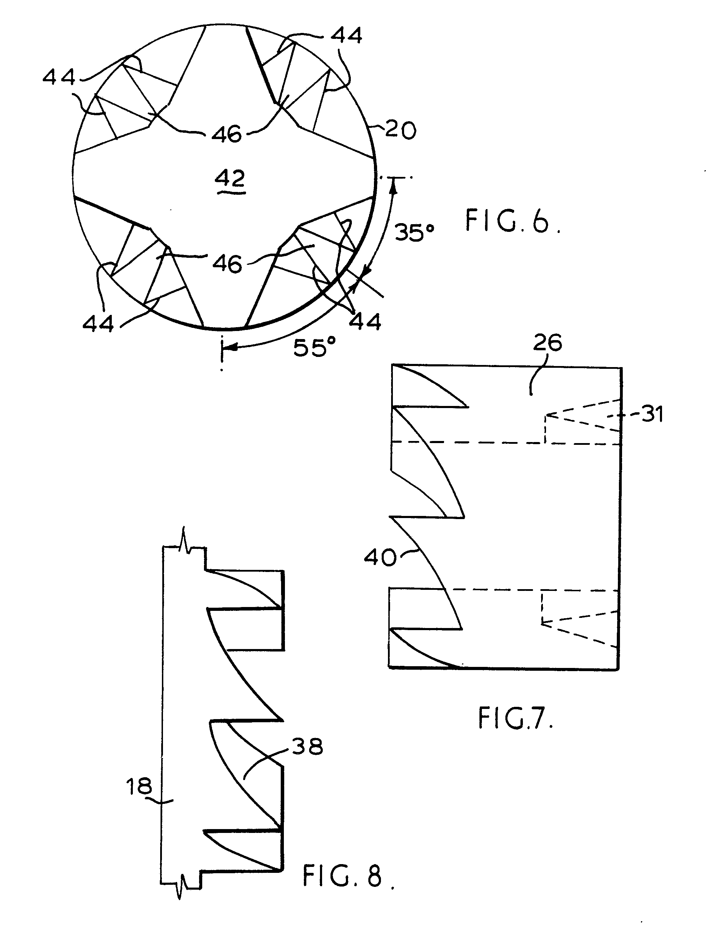

As best shown in Figures 7 and 8 the closed end of the housing 18 and the innermost axial end of the slider 26 each have eight circumferentially spaced mutually engageable sawtooth teeth 38 and 40 respectively.

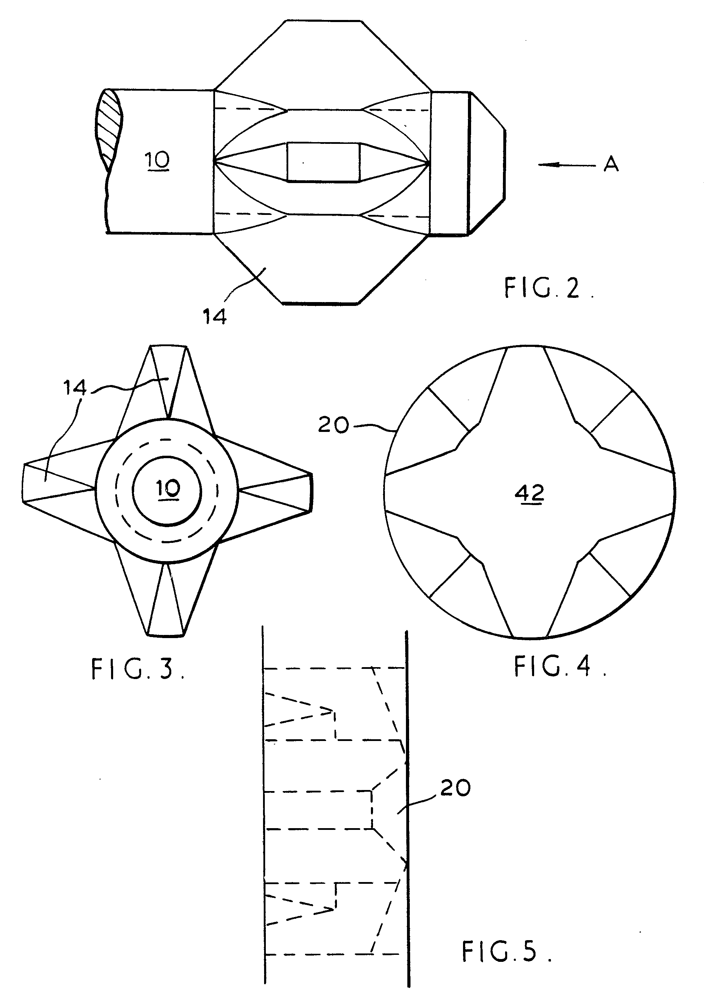

As best seen in Figures 4 and 5 the entrance guide 20 has therein a star shaped opening 42 which is profiled to permit passage therethrough of the toothed portion of the male member 10. The entrance face, i.e. the outermost face, of the entrance guide has a chamfered and blended profile (as best seen in Figure 4) which facilitates easy alignment of the male member with the opening 42. The guide 20 therefore guides the male member 10 into the housing 18 in such a manner that the tooth phasing of the male member is predetermined relative to the housing.

As best seen in Figure 7, the outermost end face of the slider 26 is recessed at 31 to receive and seat the inner ends of the teeth 14 of the male member 10. The teeth 14 of the male member 10 engage the recessed face of the slider 26 while its rotational orientation is still set by the entrance guide 20 to ensure desired angular alignment of the slider 26.

As best seen in Figure 6, the inner end face of the entrance guide 20 is provided with four pairs of teeth 44 which define chamfered recesses 46 for receiving the trailing end faces of the teeth 14 of the male member in a manner which will be described later. It is however important to note that the bottoms of recesses are not located at exactly 45° to imaginary planes bisecting adjacent openings in the entrance guide 20 through which pass the teeth 14 of the male member but are assymetrically arranged for a reason which will become apparent.

In order to fasten the male and female members 10 and 12 together the male and female members are moved relatively together in an axial direction until the teeth 14 on the male member 10 engage the chamfered outer face of the entrance guide 20. The chamfered face as aforesaid permits easy alignment of the teeth 14 of the male member 10 with the star-shaped opening 42 in the entrance guide 20. The male member 10 then passes through the opening 42 and the teeth 14 of the male member nest or seat firmly in the recessed face of the slider 26. Further relative axial movement of the male and female members moves the slider 26 axially against the force of the spring 36 until the saw tooth teeth 40 on the slider engage the saw tooth teeth 38 on the housing 18 whereupon the slider 26 and hence the male member 10 are displaced angularly by one half of the tooth pitch of the male member 10. Whether or not the shaft 16 rotates as well will depend on whether it is solid with the toothed portion of the male member 10 or free to rotate relative thereto.

When an attempt is then made to move the male and female members apart, the teeth 14 on the male member will contact the inner end face of the entrance guide 20 since the teeth 14 will have been rotated out of alignment with the opening 42.

In practice the teeth 14 of the male member will nest in the chamfered recesses 46 defined by the teeth 44 of the inner end face of the entrance guide 20. These recesses 46 serve two purposes. Firstly, they provide seats for the teeth of the male member. preventing accidental operation of the device by vibration or shock. Secondly, as the teeth 14 settle into place in the recesses 46 the assymetrical arrangement of these recesses 46 relative to the opening 42 is such as to cause the teeth 14 to rotate very slightly in the same angular direction as the rotation caused by the interaction between the teeth 38 on the housing 18 and the teeth 40 on the slider and as the slider 26 is held in engagement with the teeth 14 of the male member by the spring 36 the slider will also rotate slightly. This is important for a reason which will become apparent later.

In order to unlock and part the male and female members, the male and female members are once again moved relative to one another in an axial direction in a sense which moves the teeth 40 of the slider 26 once again into engagement with the teeth 38 on the housing against the force of the spring 36.

Because the slider 26 has been rotated slightly by the interaction of the teeth 14 with the recesses 46 from its position when it previously engaged the housing teeth 38, the teeth 40 on the slider will each engage the next tooth to the previous engagement on the housing and the slider 26 and hence the male member 10 will be rotated by another half pitch of the male member's teeth 14. It will be seen that the overall result is that the male member 10 has now been rotated by a full tooth pitch since it entered the housing 18 of the female member 12 and consequently. can now be readily withdrawn through the opening 42 in the entrance guide 20.

As shown in Figure 1, the housing teeth 38 are integral with the housing 18 but instead they could be provided on a disc snap-fittable or otherwise securable to the closed end of the housing 18.

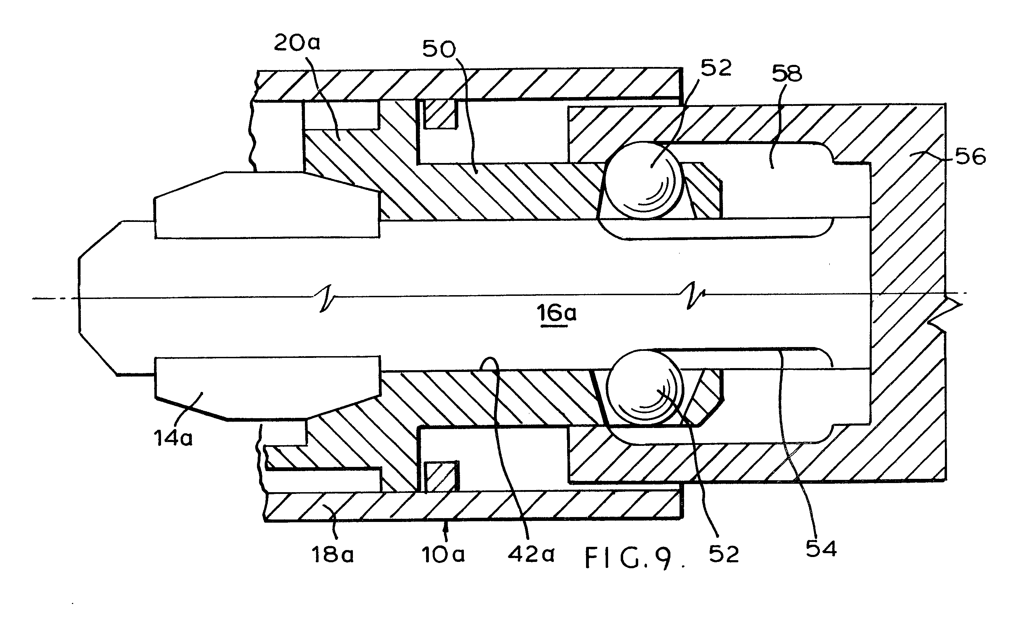

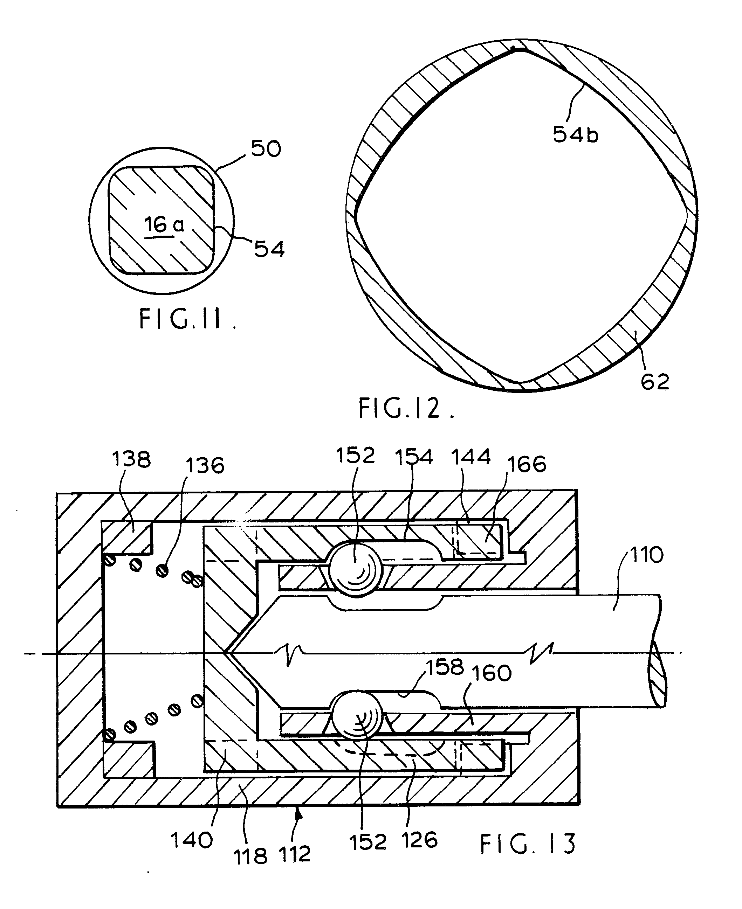

Referring now to Figures 9 and 11, the embodiment shown therein differs from that shown in Figures 1-8 in the following respects. The male member 10a includes the housing 18a; the teeth 14a are not removable from the housing 18a. The housing 18a is extended. The entrance guide 20a has a tubular extension 50 and only a plain cylindrical opening 42a; it also has a plurality, e.g. four, of radially extending outwardly tapered holes in its tubular extension 50 which each hold captive a locking element in the form of a locking ball 52. The shaft 16a bearing the teeth 14a has a circumferentially extending cam surface 54 as best seen in Figure 11 and the female member is this time in the form of a cup-shaped member 56 which is provided with an inner annular circumferentially extending groove 58 and which is separable from the housing 18a.

Initially with the male and female members 10a and 56, respectively, parted the cam surface 54 is angularly orientated as shown in the lower half of Figure 9 so that the open end of the female member 56 can pass over the locking balls 52 in one axial direction to such an extent that the balls 52 become transversely aligned with the groove 58 by the time that the free end of the shaft 16a makes contact with the inner end of the female member 56. Further relative axial movement in said one direction of the female member will result in movement of the shaft 16a and hence of the slider (not shown) towards the inner end of the housing 18a. The saw tooth teeth on the slider and the saw tooth teeth on the housing 18a will interact in exactly the same manner as described in connection with the previous embodiment to cause angular displacement of the slider and of the shaft 16a by one eighth of a revolution. This will result in the cam surface 54 urging the locking balls 52 into the groove 58 as shown in the upper half of Figure 9. With the cam surface orientated thus the locking balls 52 will prevent separation of the male and female parts 10a and 56, respectively.

In order to unlock the male and female members so as to permit separation thereof the female member 56 is again moved axially relative to the male member in said one direction. The slider and hence the shaft 16a and cam surface 54 will rotate further in the same direction so that the cam surface is now displaced by one quarter of a revolution from its original starting position to allow the open end of the female member 56 to pass over the locking balls 52 and be withdrawn.

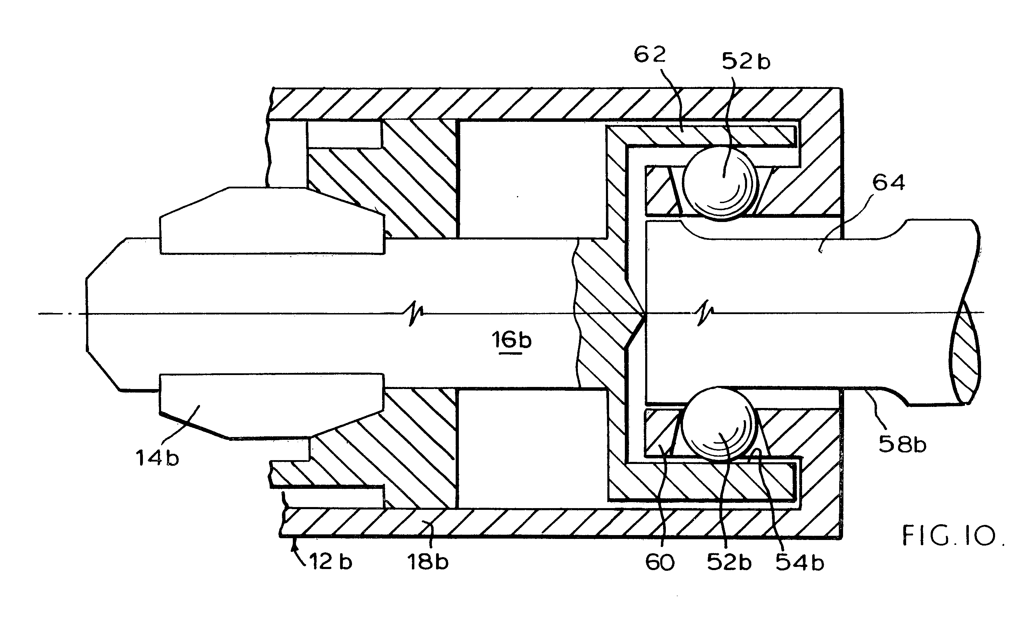

Referring now to Figures 10 and 12, the embodiment shown therein differs from that shown in Figures 9-11 in the following respects. The housing 18b and shaft 16b now form part of the female member 12b. The locking balls 52b are held captive in tapered holes in an annular re-entrant flange 60 of the housing 18b. The cam surface 54b as best seen in Figure 12 is provided by a cup-shaped portion 62 at the free end of the shaft 16b and is axially slidable in a gap defined between the housing 18b and its re-entrant flange 60 to this time urge the locking balls 52b radially inwards, and the male member is in the form of a stud-shaped member 64 provided with an annular circumferentially extending groove 58b in its peripheral surface.

This embodiment operates in a similar manner to the embodiment shown in Figures 9 and 11 and described above. To lock the male and female members together the male member 64 is moved axially into the re-entrant flange 60 of the housing 18b of the female member and over the locking balls 52b until it comes into contact with the base of the cup-shaped portion 62 at the free end of the shaft 16b. Further axial movement of the male member 64 moves the shaft 16b and slider (not shown) towards the closed end of the housing 18b. Interaction between the saw tooth teeth of the slider and of the housing 18b displaces the slider the shaft 16b and hence the cam surface 54b angularly to urge the locking balls 52b outwardly and into the groove 58b and lock the male and female members together. The male and female members can be unlocked by again moving them axially relative to one another.

The embodiment shown in Figure 13 is a simplified constructional arrangement of the embodiment shown in Figures 10 and 12 and comprises a stud-like male member 110, a female member 112 having a housing 118 closed at one end and open at the other, and a cup-shaped slider 126.

The housing 118 has a re-entrant flange 160 at its open end and this re-entrant flange has four equi-angularly spaced radially extending and inwardly tapered holes which each hold captive a locking ball 152. The housing also has sawtooth teeth 138 and 144 at its closed end and at its open end in the gap between its outer wall and its re-entrant flange 160, respectively. The sawtooth teeth 138 and 144 are respectively engageable with sawtooth teeth 140 on the base of the cup-shaped slider 126 and sawtooth teeth 166 at the open end of the cup-shaped slider 126.

The slider 126 is slidable in the housing 118 and extends into the aforesaid gap between the outer wall and the re-entrant flange 160 of the housing 118, the slider 126 being urged towards the open end of the housing 118 by a dished compression spring 136.

The slider 126 has an inner circumferentially extending cam surface 154 and the stud-like male member 110 has an annular circumferentially extending groove 158.

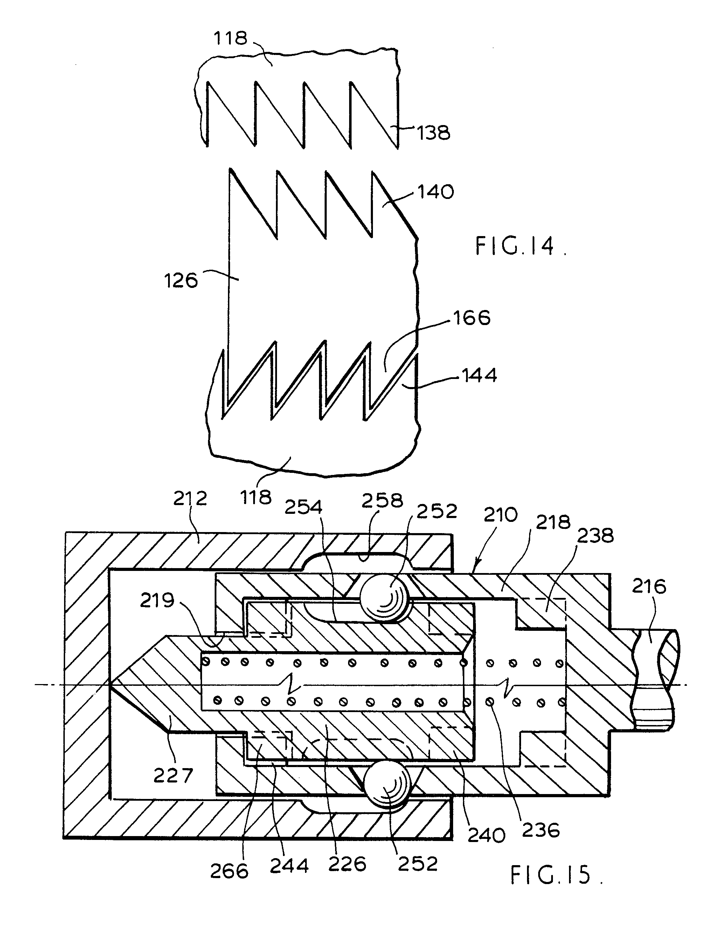

When the male and female members are parted the slider 126 is angularly orientated with its cam surface 154 as shown in the upper half of Figure 13. In order to lock the male and female members together the male member 110 is moved axially through the re-entrant flange 160 of the housing 118 and because of the aforesaid angular orientation of the cam surface 154 the male member 110 can pass over the locking balls 152 and its pointed end can engage in a correspondingly shaped recess in the base of the cup-shaped slider 126. Further axial movement of the male member 110 results in axial movement of the slider 126 against the force of the spring 136. When the sawtooth teeth 140 of the slider 126 engage with the sawtooth teeth 138 of the housing 118 the slider is angularly displaced. This results in angular displacement of the cam surface 154 to urge the locking balls 152 into the groove 158 in the male member 110. When an attempt is made to withdraw the male member 110 the inner end of the groove 158 moves into engagement with the locking balls 152 to lock the male and female members together. The slider 126 moves towards the open end of the housing 118 under the action of the spring 136 and the sawtooth teeth 166 at the open end of the slider 126 engage with the sawtooth teeth 144 in the housing 118. As best seen from the schematic view of Figure 14, the teeth 138 and 144 are angularly offset from one another such that when the teeth 166 engage the teeth 144 the slider is further displaced angularly in the same direction as previously but not so that the cam surface 154 releases the locking balls 152 from engagement with the groove 158 of the male member. This offset arrangement of the teeth 138 and 144 does however ensure that when the slider teeth 140 next engage the housing teeth 138 on a subsequent inward axial movement of the male member 110, the slider is further displaced angularly in the same direction as previously so that the cam surface 154 now allows the locking balls 152 to disengage from the groove 158 to permit the male and female members to be separated.

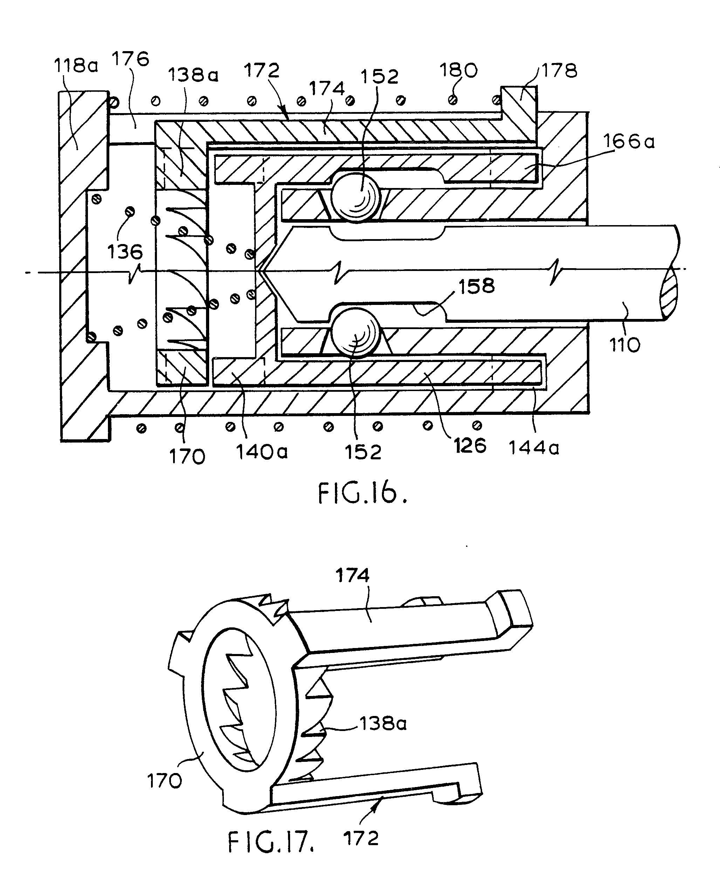

The embodiment shown in Figure 15 comprises a male member 210 having a housing 218 attached to a shaft 216 and accommodating a slider 226, and a cup-shaped female member 212. The housing 218 has an opening 219 at one end through which a projecting portion 227 of the slider 226 extends under the action of a compression spring 236. The housing 218 has at opposite ends sawtooth teeth 238 and 244 respectively, which are engageable with sawtooth teeth 240 and 266, respectively, on the slider 226. The teeth 238 and 244 are angularly offset in similar manner to the teeth 138 and 144 of Figure 14. The slider 226 has a cam surface 254 which acts on locking balls 252 held captive in radially extending outwardly tapered holes in housing 218 and the female member 212 has an inner annular circumferentially extending groove 258.

When the male and female members are moved together axially the free end of the female member 212 passes over the locking balls 252 and the base of the female member engages the projecting portion 227 of the slider 226. The slider teeth 240 are driven into engagement with the teeth 238 in the housing 218 and the slider 226 is displaced angularly so that cam surface 254 urges the balls 252 into the groove 258 (as shown in the lower half of Figure 15) to lock the male and female members together. The teeth 244 and 266 co-operate as described in the previous embodiment to displace the slider 226 further in the same angular direction so that when the male and female members are again pushed together the teeth 238 and 240 again co-operate to displace the slider yet further in the same angular direction so that the cam surface allows the locking balls 252 to disengage from the groove 258 to permit the male and female members to be separated.

The embodiment shown in Figures 16 and 17 is similar to that shown in Figure 13 but instead of teeth 138 fixed at the inner end of the housing 118a teeth 138a are provided on a ring portion 170 of a spider 172 (best seen in Figure 17) legs 174 of which are slidably mounted in longitudinally extending slots 176 in the wall of the housing 118a. The spider 172 is slidable axially to a limited degree in the housing 118a but is prevented by interaction between the legs 174 and the walls of the slots 176 from angular movement relative to the housing 118a. The free ends of the legs 174 of the spider have outwardly projecting feet 178 which are acted upon by a weak compression spring 180 to urge the spider 172 towards the open end of the housing 118a until the feet 178 engage the ends of the slots 176. With this arrangement one or other of teeth 140a and 166a on the slider 126' are always at least partially in engagement with respective teeth 138a, 144a to provide a detent operation and prevent unintentional angular displacement of the slider 126 during axial movement thereof.

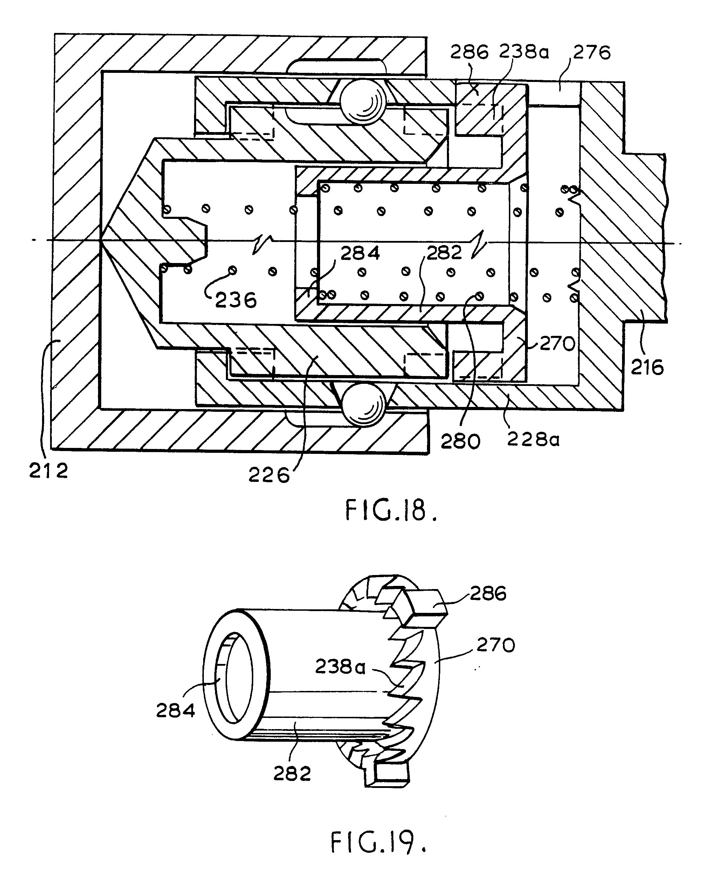

The same principle may be applied to the embodiment of Figure 15 as shown in Figures 18 and 19. In this case instead of teeth 238, teeth 238a are provided on a ring 270 at one end of a tube 282. The tube 282 extends into the slider 226 and has an inwardly directed flange 284 at its end remote from the ring 270 which is acted upon by a weak compression spring 280. Tabs 286 project radially outwards from the ring 270 and are guided in slots 276 to permit axial but prevent angular movement of the tube 282 relative to the housing 228a.

The embodiments described above are given by way of example only and many other modifications may be possible without departing from the scope of the invention as defined in the appended claims.

## Claims

1. A releasable axial locking device for locking together and unlocking two separable members (10,12; 110, 112; 210, 212) by relative axial movement of the two members in one sense, the device having locking means comprising resilient means (36; 136; 236) which oppose the relative axial movement of the two members in said one sense, a slider (26; 126; 226) associated with one of the members (12;

112; 212) and moveable axially relative to said one member when the two members are moved axially relative to one another in said one sense, and means (26; 126; 226) moveable in an angular direction as the two members are moved axially relative to one another in said one sense. characterised in that the angularly moveable means comprise a member (26; 16a; 62; 126; 226), which, when moved angularly, acts on a locking member (10; 52: 52b; 152; 252) and moves it into a position in which separation of the two separable members is prevented.

2. The locking device of Claim 1, wherein the angularly moveable means comprise cam means (16a; 62; 126; 226) which lock the two separable members (10, 12; 110, 112; 210. 212) together on a first relative axial movement of the two separable members in said one sense, and then unlocks the two members on a second relative axial movement in said one sense.

3. The locking device of Claim 2, wherein the locking means comprises locking members (15; 15b; 152; 252) which have a radial component of movement which serves to lock the two separable members (10, 12; 1110, 1112; 210, 212) together, the cam means providing a cam surface (54; 54b; 154; 254) whose radial position alters as the cam means are moved angularly.

4. The locking device of Claim 3, wherein the cam means (62; 126) have an internal cam surface (54b; 154) for actuating locking means (52b; 152) which are moveable inwards to lock.

5. The locking device of Claim 3, wherein the cam means (16a; 226) have an external cam surface (54; 254) for actuating locking means (52; 252) which are moveable outwards to lock.

6. The locking device of any of Claims 2 to 5, wherein the cam means (16a; 62; 126; 226) are also moveable axially relative to said one member (12; 112; 212).

7. The locking device of Claim 1, wherein the other said member (10) has a projection (14) and the angularly moveable means (26) has a detent (31) which engages said other member when the two separable members (10, 12) are moved relative to each other in said one sense, the angularly moveable means thereby moving said other member angularly, the device comprising a further detent (46) secured to said one member (12) which, when said other member is so moved angularly, engages said projection to prevent separation of the two separable members.

8. The locking device of Claim 7, wherein the angularly moveable means (26) are also moveable axially relative to said one member (12).

9. The locking device of Claim 5 or 8, wherein the angularly moveable means (26; 16a; 62; 126; 226) has angular displacing means (40, 14a; 40, 14b; 140, 166; 240, 266) facing in opposite axial directions for co-acting with angular displacing means (38, 44; 138, 144; 238, 244) angularly fixed with respect to said one member (12; 112; 212).

10. The locking device of any of the preceding Claims, wherein relative axial movement of the two separable members (10, 12; 1110, 112; 210, 212) in said one sense causes an initial angular movement of the angularly moveable means (26; 16a; 62; 126; 226), and relative axial movement of the two separable members in the opposite sense causes further angular movement of the angularly moveable means in the same sense as the initial movement.

11. The locking device of Claim 10, wherein relative axial movement of the two separable members (10, 12; 1110, 112; 210, 212) in said one sense causes the angularly moveable means (26; 16a; 62; 126; 226) to move the locking member (10; 52; 52b; 152; 252) into a position in which separation of the two separable members is prevented.

FIG.1.

EP 0 323 863 A2

EP 0 323 863 A2

10

14

FIG. 2.

A

14

10

FIG. 3.

20

42

FIG. 4.

20

FIG. 5.

FIG. 6.

FIG.7.

FIG. 8.

FIG.9.

FIG. IO.

EP 0 323 863 A2

FIG.11.

FIG.12.

FIG.13

FIG.14.

FIG.15.

FIG.16.

FIG.17.

286 238a 276

284 282

236

270

216

280 228a

212 226

FIG.18.

286

270

238a

284

282

FIG.19.